# EUROPEAN PATENT SPECIFICATION

(11) **EP 2 637 246 B1**
(45) Date of publication and mention of the grant of the patent: **14.08.2019**
(21) Application number: 10859272.6
(22) Date of filing: 05.11.2010
(51) Int. Cl.: H01M 10/48, H01M 10/615, H01M 10/637, H01G 11/14, H01G 11/18, H02M 3/158, H01M 10/44

(54) **CHARGING/DISCHARGING DEVICE AND METHOD FOR CONTROLLING CHARGING AND DISCHARGING**
LADE-/ENTLADEVORRICHTUNG UND VERFAHREN ZUR STEUERUNG EINES LADE- UND ENTLADEVORGANGS
DISPOSITIF DE CHARGEMENT/DÉCHARGEMENT ET PROCÉDÉ DE COMMANDE DU CHARGEMENT ET DU DÉCHARGEMENT

(43) Date of publication of application: 11.09.2013
(73) Proprietor: Mitsubishi Electric Corporation, Tokyo 100-8310 (JP)
(72) Inventor: YOSHIOKA, Shoji, Tokyo 100-8310 (JP); HATANAKA, Keita, Tokyo 100-8310 (JP); KITANAKA, Hidetoshi, Tokyo 100-8310 (JP)
(74) Representative: Zech, Stefan Markus
(86) International application number: PCT/JP2010/069739
(87) International publication number: WO 2012/060016

(56) References cited:
- WO-A1-2006/135192
- WO-A1-2009/149273
- JP-A- 9 182 309
- JP-A- 2002 101 571
- JP-A- 2002 125 326
- JP-A- 2003 272 712
- JP-A- 2004 015 866
- JP-A- 2006 092 901
- JP-A- 2010 093 883
- US-A1- 2009 251 103
- US-A1- 2010 085 019
- US-A1- 2012 021 263

## Description

### Field

The present invention relates to a charge/discharge device and a charge/discharge controlling method performing charge/discharge control of an electric-power storage apparatus.

### Background

Generally, a secondary battery represented by a nickel-hydrogen battery and a lithium-ion battery, a large-capacity electric double-layer capacitor, and the like are used for an electric-power storage device. Because a chemical reaction and a mass transfer phenomenon are utilized in an electric-power storage process of these electric-power storage devices, their performance is easily influenced by an environmental temperature.

A rate of the chemical reaction is reduced particularly at a low temperature with an increase in an internal resistance. For example, the internal resistance at a temperature below freezing increases five times or more than in a room temperature environment. This is because a transfer rate of a charge carrier such as an ion related to the chemical reaction within the electric-power storage device is reduced in a low-temperature environment. Particularly, because an ion transfers in an electrolyte within the device, an increase in the liquid viscosity caused by a low temperature reduces the ion transfer rate, thereby causing a rapid increase in the resistance.

Such an increase in the internal resistance at a low temperature generates an IR loss (an increase in required electric power at the time of charge or a reduction in an output at the time of discharge) larger than a usual loss at the time of charge or discharge, much energy is lost as heat, and a system efficiency is reduced. Furthermore, because an increase in the IR loss at the time of charge increases a voltage of the electric-power storage device, only a small current at the time of charge causes the device to reach a use upper-limit voltage of the device. Because the voltage of the electric-power storage device is reduced at the time of discharge, the device reaches a use lower-limit voltage. That is, a current value that can be applied is reduced.

Further, when charge and discharge is repeated in a state of reduced reaction activity, an incomplete reaction occurs within the device and thus deterioration of the electric-power storage device is accelerated. For example, in the case of the lithium-ion battery, a sufficient charge rate cannot be obtained at a low temperature, a deposition reaction of highly-active lithium metal occurs at a negative electrode as a side reaction, and deterioration such as a reduction in a capacity of the electric-power storage device or a reduction in safety is accelerated. Because such phenomena are frequently observed at a low temperature, when the device is assumed to be used at a low temperature, a system that considers suppression or stop of use of a charge current needs to be designed.

In recent years, development of a system that has the electric-power storage device incorporated in an electric car or a car, stores regeneration energy at the time of braking in the electric-power storage device, and reutilizes the energy at the time of power-running/acceleration is advanced. An electric-power storage system for devices presupposing field running requires sufficient performance even in the low-temperature environment. While devices of an electric car are generally designed to normally operate at about -25°C, an electric-power storage device that satisfies sufficient performance even at about -25°C does not currently exist.

As a method of starting up the electric-power storage device in the low-temperature environment, a method of directly heating a surface of the electric-power storage device with a heater from an external power supply is provided; however, heat release occurs from the opposite side of the heater in this method and thus a heating effect is low. On the other hand, when the electric-power storage device is energized to be charged and discharged and heating is performed by using an internal resistance as a heat generation source, the electric-power storage device can be efficiently heated. For example, as one of heating methods by energization, a configuration that enables to reduce a switching frequency of a chopper circuit connected to the electric-power storage device to increase a current ripple, thereby heating the electric-power storage device utilizing Joule heat at that time is also studied (see, for example, Patent Literature 1 mentioned below). Patent Literature 2 is considered to be the relevant background art and discloses a battery temperature control system, in temperature rise control, sets a maximum chargeable current and a maximum dischargeable current based on detection values of current, voltage, and temperature of a high-voltage battery, and controls charging/discharging power so that the current of the high-voltage battery does not exceed the maximum chargeable current or the maximum dischargeable current.
Patent Literature 3 discloses a method of determining state of charge of an energy delivery device includes sampling voltage values of the energy delivery device during relaxation of the device.
Patent Literature 4 discloses a temperature elevating apparatus of a secondary battery includes a ripple generator and a controller.

### Citation List

### Patent Literature

Patent Literature 1: Japanese Patent Application Laid-open No. 2006-006073
Patent Literature 2: US 2010/085019 A1
Patent Literature 3: WO 2009/149273 A1
Patent Literature 4: US 2012/021263 A1

However, according to the conventional method of heating the electric-power storage device utilizing Joule heat, a current is applied to the electric-power storage device to heat the electric-power storage device with reaction heat and Joule heat generated by charge or discharge. For example, the switching frequency of the chopper circuit connected to the electric-power storage device is controlled to increase a ripple current. Accordingly, the following problems occur.
(1) The internal resistance of the electric-power storage device changes depending on a temperature and an SOC (State of Charge: a charge state, a charge level). Accordingly, in a case that a current value applied for heating is under the same condition, generation of reaction heat and Joule heat is small and the heating effect is reduced when the internal resistance is small. Particularly when a heat capacity of the electric-power storage device is large, an effective increase in the temperature is sometimes not found. Conversely, when the internal resistance of the electric-power storage device is large, a voltage of the electric-power storage device reaches an upper-limit voltage or a lower-limit voltage because of a large IR loss generated at the time of applying a current, so that a current corresponding to electric power required for heating cannot be applied.
(2) In a case that the electric-power storage device is heated by applying a unidirectional current, that is, a current in a charge direction or a discharge direction thereto, heating by discharge takes a short time when the SOC is low at the time of start of heating and a heating time by charge cannot be sufficiently obtained when the SOC is high. To solve this problem, heating for a long time independent of the SOC is enabled by alternately repeating charge and discharge. However, the internal resistance of the electric-power storage depends on a period of repeating charge and discharge (a repetition period) and thus a desired heating effect cannot be obtained when the repetition period is not appropriate.
(3) As described in Patent Literature 1, the internal resistance of the electric-power storage device is generally larger as the temperature is lower, and a variation factor of the internal resistance depends on an SOC level as well as the temperature. An increase in the internal resistance with progression of deterioration of the electric-power storage device also needs to be considered. Consequently, according to the heating method of using only a data table of the internal resistance and the temperature as described in Patent Literature 1, effective heating is difficult.

The present invention has been achieved in view of the above problems, and an object of the present invention is to provide a charge/discharge device and a charge/discharge controlling method that can efficiently increase a temperature of an electric-power storage apparatus including an electric-power storage device such as a secondary battery or an electric double-layer capacitor.

### Solution to Problem

There is provided a charge/discharge device that controls charge/discharge of an electric-power storage apparatus, the charge/discharge device comprising: a heating determination unit that obtains a temperature of the electric-power storage apparatus at a time of starting up the electric-power storage apparatus and determines whether to heat the electric-power storage apparatus based on the temperature; and the heating control unit that controls heating of the electric-power storage apparatus, when the heating determination unit determines to heat the electric-power storage apparatus, by obtaining a frequency characteristic of a resistance value of an internal resistance of the electric-power storage apparatus corresponding to a temperature and a charge level of the electric-power storage apparatus and performing control of alternately repeating charge and discharge of the electric-power storage apparatus in a charge/discharge period specified based on the frequency characteristic. Advantageous Effects of Invention

The charge/discharge device and the charge/discharge controlling method according to the present invention can efficiently increase a temperature of the electric-power storage apparatus.

### Brief Description of Drawings

FIG. 1 is a configuration example of a charge/discharge device of the present invention.
FIG. 2 is an example of a data table that shows measurement results of a dependency of an internal resistance on a temperature and an SOC.
FIG. 3 is an example of an energizing pattern of an electric-power accumulation apparatus.
FIG. 4 is an example of a relationship between a resistance value of an internal resistance of an electric-power storage apparatus and a frequency.
FIG. 5 is an example of a procedure of specifying a current value required for heating.

### Description of Embodiments

Exemplary embodiments of a charge/discharge device and a charge/discharge controlling method according to the present invention will be explained below in detail with reference to the accompanying drawings. The present invention is not limited to the embodiments.

### Embodiment.

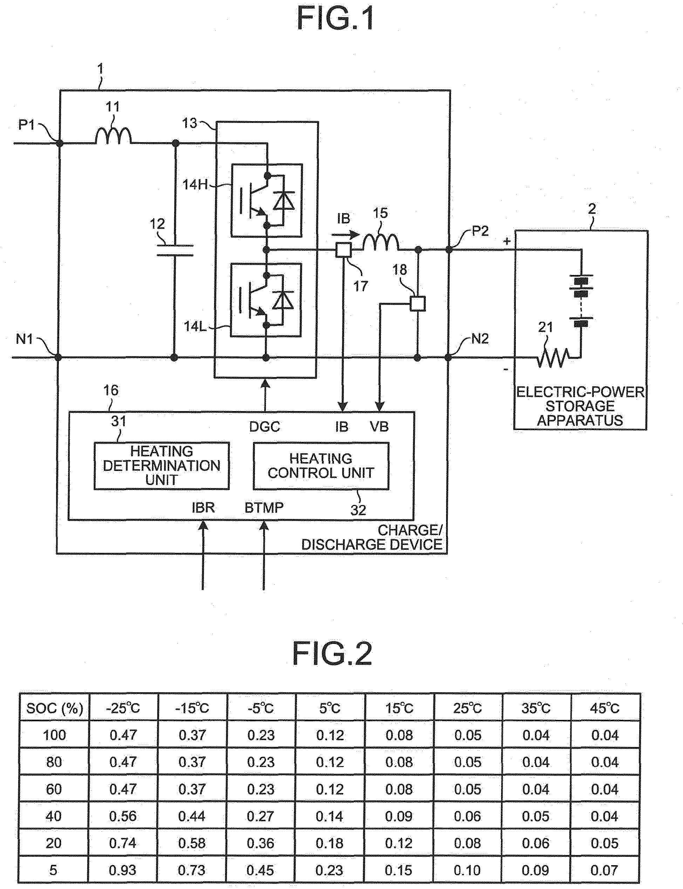

FIG. 1 is a configuration example of a charge/discharge device according to the present invention. As shown in FIG. 1, a charge/discharge device 1 according to the present embodiment includes terminals P1, N1, P2, and N2, a reactor 11, a filter capacitor 12, a switching circuit 13, a smoothing reactor 15, a control unit 16, a current detector 17, and a voltage detector 18. The control unit 16 includes a heating determination unit 31 and a heating control unit 32.

The charge/discharge device 1 is connected via the terminals P2 and N2 to an electric-power storage apparatus 2. The electric-power storage apparatus 2 is an electric-power storage unit that includes an electric-power storage device such as a secondary battery represented by a nickel-hydrogen battery and a lithium-ion battery, or a large-capacity electric double-layer capacitor.

Electric power from an external power supply is input to the terminals P1 and N1. The reactor 11 is connected to the input terminal P1 and the filter capacitor 12 is connected at a subsequent stage of the reactor 11. An LC filter circuit including the reactor 11 and the filter capacitor 12 suppresses a flow of a noise current generated by a switching operation of a switching element to be explained later to the external power supply and smoothes a ripple component included in an external power-supply voltage input from the external power supply to smooth a voltage between ends of the filter capacitor 12.

The switching circuit 13 is connected to the both ends of the filter capacitor 12. The switching circuit 13 includes switching elements 14H and 14L. The switching elements 14H and 14L are on/off controlled (switching-controlled) by an on/off signal DGC from the control unit 16. The switching circuit 13 is a so-called bidirectional step-down chopper circuit and has a current control function of adjusting an output current to any value, as well as a step-down function of stepping down a voltage of the filter capacitor 12 by switching control of the switching elements 14H and 14L and outputting a stepped-down voltage. Because its circuit configuration and operations are publicly well known, explanations thereof will be omitted.

The current detector 17 that detects an output current IB from the switching circuit 13 and outputs the detected current to the control unit 16 is connected at a subsequent stage of the switching circuit 13. The smoothing reactor 15 that smoothes a current is connected at a subsequent stage of the current detector 17. The voltage detector 18 detects a voltage of a subsequent stage of the smoothing reactor 15 (= a voltage of the electric-power storage apparatus 2) and outputs a detected output voltage VB to the control unit 16.

A signal IBR that indicates a target value of the output current IB of the switching circuit 13 and a signal BTMP that corresponds to a temperature within the electric-power storage apparatus 2 are externally input to the control unit 16. The control unit 16 generates the on/off signal DGC that controls on/off of the switching circuit 13 based on these input signals. The control unit 16 normally generates the on/off signal DGC so that the output current IB has the target value indicated by the signal IBR. When the temperature within the electric-power storage apparatus 2 is equal to or lower than a predetermined value (at the time of a low temperature), the control unit 16 specifies a current value required for heating the electric-power storage apparatus 2 and generates the on/off signal DGC so that the output current IB has the specified current value.

Generally, according to the electric-power storage apparatus 2, a rate of a chemical reaction is reduced with an increase in the internal resistance at a low temperature and thus performance thereof is reduced. Accordingly, when the electric-power storage apparatus 2 is started up in a low-temperature environment, the electric-power storage apparatus 2 is desirably heated to a temperature at which sufficient activation is achieved. When the electric-power storage apparatus 2 is heated by energization, energy required for heating can be computed based on a heat capacity of a device used as the electric-power storage apparatus 2. For example, when this device uses a lithium-ion battery, a plurality of materials such as a positive electrode, a negative electrode, a separator, an electrolyte, and a container are used for the device and an average heat capacity thereof is about 1 J/K/g. Energy required for heating a device of 1 kilogram by 10 K is 10000 joules. When the internal resistance of the device is fixed at 10 mΩ, the time required for heating is 100 seconds in the case of energization at a current of 100 ampere and 10000 seconds in the case of energization at a current of 10 ampere. The time required for heating thus largely depends on the current value.

Meanwhile, an IR loss is large and an applicable current value is small in the low-temperature environment. Furthermore, when heating is performed only with a current in the charge direction, energization ends with full charge. Similarly, when a stored electricity amount has been released, further heating cannot be performed only with a current in the discharge direction. Accordingly, the electric-power storage apparatus 2 may not be sufficiently heated only by heating in the charge direction or heating in the discharge direction. According to the present embodiment, by performing energization in a pattern of alternately repeating charge and discharge, effective heating is performed. A heating method of the present embodiment is explained below.

The electric-power storage apparatus 2 includes an internal resistance 21 changing depending on an environmental temperature. With reference to FIG. 1, an internal resistance of the electric-power storage device is shown by an equivalent circuit resistance as the internal resistance 21. While the practical internal resistance of the electric-power storage apparatus 2 is the equivalent circuit resistance having a time constant including a capacity component, the internal resistance can be simply shown by a resistance changing depending on a temperature in a steady state as shown in FIG. 1. This internal resistance 21 also has a dependency on an SOC in addition to the temperature. Before the electric-power storage apparatus 2 is mounted to a system using the electric-power storage apparatus 2, the dependency of the internal resistance 21 on the temperature and the SOC is measured as initial data.

FIG. 2 is an example of a data table that shows measurement results of the dependency of the internal resistance 21 on the temperature and the SOC. The example of FIG. 2 shows initial measurement results (resistance values) of the dependency of the internal resistance 21 on the temperature and the SOC when a lithium-ion battery is used as the electric-power storage apparatus 2. A measurement temperature range is from -25°C to +45°C and the range of the SOC is from 0% to 100%. A unit of the resistance value in FIG. 2 is a resistance value mΩ/Ah standardized on a capacity.

For example, when the charge level is an SOC of 60% at an environmental temperature of -5°C, the resistance value is 0.23 mΩ/Ah. Accordingly, when a current of 10 ampere is applied to a single cell of 50 ampere-hour, a voltage drop of 115 millivolts occurs and heat of 1.15 watts is generated. When a current of 20 ampere is applied to this cell, a voltage drop of 230 millivolts occurs and heat of 4.6 watts is generated. Because this is heat generated from the inside of the electric-power storage apparatus 2, the electric-power storage apparatus 2 in the low-temperature environment can be efficiently heated. However, when the electric-power storage apparatus 2 is heated only by the current in the charge direction or the current in the discharge direction as explained above, the heating time is constrained.

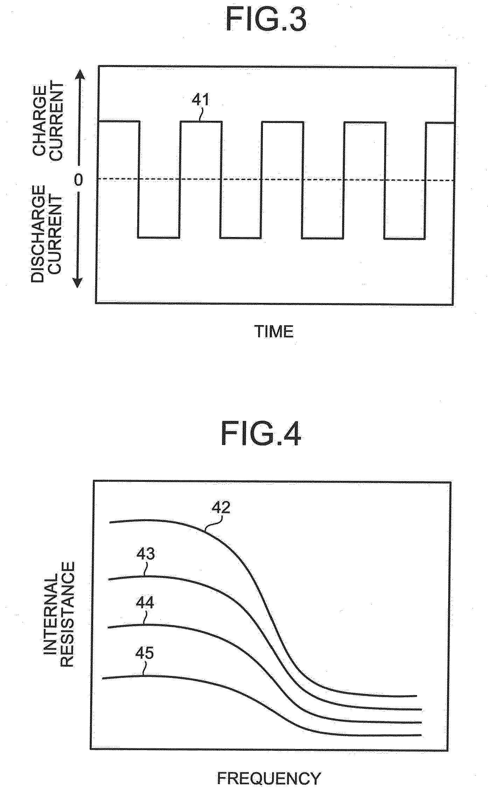

According to the present embodiment, the charge/discharge device 1 performs energization in the pattern of alternately repeating charge and discharge so that a charged electricity amount and a discharged electricity amount for the electric-power accumulation apparatus 2 are substantially equal to each other in a fixed period. FIG. 3 is an example of an energizing pattern of the electric-power accumulation apparatus 2. A current waveform 41 shows an example of the energizing pattern of alternately repeating charge and discharge so that the charged electricity amount is substantially equal to the discharged electricity amount. The control unit 16 of the charge/discharge device 1 controls the on/off signal to be output to the switching circuit 13 so that a current is output to the electric-power accumulation apparatus 2, for example, in the energizing pattern shown in FIG. 3.

By repeating the energizing pattern shown in FIG. 3 for a fixed period of time, continuous energization can be performed while the SOC is maintained to be constant and the time constraint to heat the electric-power storage apparatus 2 to a required temperature is eliminated. At the time of this energization, the current value during charge can be different from the current value during discharge. For example, when a lithium-ion battery is used for the electric-power accumulation apparatus 2, an influence of a charge current upon deterioration is relatively large and thus it is preferable that the current value in the charge direction is reduced to extend the energizing time and the current value in the discharge direction is increased to reduce the energizing time. When the voltage of the electric-power accumulation apparatus 2 is relatively high and the SOC is of a high level, an upper-limit voltage is reached because of a voltage loss at the time of application of the charge current and a desired current cannot be applied. Accordingly, it is preferable that the current value in the charge direction is reduced to extend the energizing time. When an SOC level is low, a cell voltage is also low and thus a lower-limit voltage is reached because of the voltage loss at the time of application of a discharge current and a predetermined current cannot be applied. Accordingly, it is preferable to set the current value in the charge direction to be increased to reduce the energizing time and the current in the discharge direction to be reduced to extend the energizing time.

FIG. 3 is only an example and as long as an energizing pattern that the charged electricity amount is substantially equal to the discharged electricity amount is used, and the present invention is not limited to the example shown in FIG. 3. The current waveform can be a triangular wave, a rectangular wave, a sinusoidal wave, or a pulsed triangular wave as seen in a ripple current. As long as the charged electricity amount is equivalent to the discharged electricity amount, the waveform does not need to have a particular shape and combinations of different waveforms can be permitted. Furthermore, a current can be applied in such a manner that charge is performed for a fixed period of time to increase the SOC and then the charged electricity amount becomes equivalent to the discharged electricity amount. Alternatively, a current can be applied in such a manner that discharge is performed for a fixed period of time to reduce the SOC and then the charged electricity amount becomes equivalent to the discharged electricity amount.

The electric-power storage apparatus 2 can be generally shown by a parallel equivalent circuit of resistance and a capacitor and when an AC current is applied thereto, a voltage waveform according to a time constant is output. Also in the case of applying a rectangular wave as shown in FIG. 3, the voltage waveform according to the time constant is similarly output. When a reciprocal of the time required for a period of charge and discharge (a cycle: charge/discharge period) is a frequency, the internal resistance 21 depends on the frequency. FIG. 4 is an example of a relationship between the resistance value of the internal resistance 21 of the electric-power storage apparatus 2 and the frequency. A frequency dependency 42 shown in FIG. 4 indicates a frequency dependency of the resistance value of the internal resistance 21 at -15°C, a frequency dependency 43 indicates a frequency dependency of the resistance value of the internal resistance 21 at -5°C, a frequency dependency 44 indicates a frequency dependency of the resistance value of the internal resistance 21 at 5°C, and a frequency dependency 45 indicates a frequency dependency of the resistance value of the internal resistance 21 at 25°C. These frequency dependencies 42 to 45 indicate values at the same SOC.

As shown in FIG. 4, as the frequency is increased, the internal resistance 21 (the resistance value of the internal resistance 21) is reduced. Conversely, as the frequency is reduced, the internal resistance 21 is increased. This tendency does not depend on the temperature. When the initial measurement results of the dependency of the internal resistance 21 on the temperature and the SOC shown in FIG. 2 are obtained, the relationship between the internal resistance 21 and the frequency shown in FIG. 4 is also obtained. The control unit 16 holds the initial measurement results of the dependency of the internal resistance 21 on the temperature and the SOC and the relationship between the internal resistance 21 and the frequency for each temperature and each SOC (frequency dependent characteristic) as a data table of the initial data. The frequency dependent characteristic can be held for each combination of the temperature and the SOC. Alternatively, a method of holding the frequency dependent characteristic for each temperature and correcting the frequency dependent characteristic depending on an SOC value, or the like can be used. Furthermore, instead of holding as the data table, the frequency dependent characteristic can be held as an approximate expression of parameters (the temperature, the SOC, and the frequency).

The internal resistance 21 is irreversibly increased according to the number of charge/discharge cycles and an elapsed time. The increase rate of the resistance value of the internal resistance 21 changes in a complicated manner also depending on conditions of use such as an operating temperature environment of the electric-power storage apparatus 2, a charge/discharge current, and a voltage. For example, when the charge current and the environmental temperature are high, the increase rate of the resistance value of the internal resistance 21 is high and as the voltage is increased, the rate of aged deterioration is increased. By repeating charge and discharge at a low temperature, the resistance value of the internal resistance 21 is increased. Accordingly, the initial data shown in FIG. 2 can be used only in an initial stage of using the electric-power storage apparatus 2. According to the present embodiment, when the current value required for heating the electric-power storage apparatus 2 at a low temperature is calculated, the resistance value of the internal resistance 21 measured on a real-time basis is used. When it is assumed that a change from the initial data is small (when the time elapsed from when the electric-power storage apparatus 2 starts to be used is short, or the like), the initial data can be used.

According to the present embodiment, the current detector 17 measures the output current IB of the switching circuit 13 and the voltage detector 18 measures the output voltage VB serving as the voltage of the subsequent stage of the smoothing reactor 15 (= the voltage of the electric-power storage apparatus 2). The control unit 16 measures the resistance value of the internal resistance 21 based on the output current IB and the output voltage VB measured on a real-time basis.

When the resistance value is measured on a real-time basis, any current is applied for a fixed period of time, the current is then reduced to zero, and the frequency dependency of the internal resistance 21 is identified based on a voltage relaxation process immediately after the current is reduced to zero. When the charge current is applied for a fixed period of time and then the current is reduced to zero, a voltage is reduced. A reduction in the voltage immediately after the current is reduced zero corresponds to a change in the voltage by a high frequency component of the internal resistance 21 and a change in the voltage in a voltage change area after a long period of time elapses corresponds to a change in the voltage by a low frequency component of the internal resistance 21. That is, the frequency dependency of the resistance value of the internal resistance 21 can be calculated based on a voltage reduction characteristic after the current is reduced to zero.

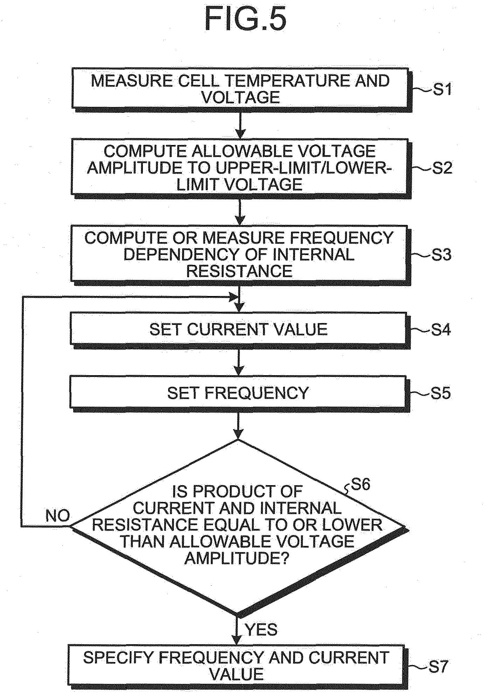

FIG. 5 is an example of a procedure of specifying a current value required for heating the electric-power storage apparatus 2 according to the present embodiment. At the time of starting up the electric-power storage apparatus 2, the heating determination unit 31 of the control unit 16 obtains an externally-input cell temperature BTMP of the electric-power storage apparatus 2. The cell temperature BTMP is measured by, for example, a thermistor or a thermocouple built in the electric-power storage apparatus 2 and input to the control unit 16. When the cell temperature BTMP is lower than a threshold (for example, 5°C), the heating determination unit 31 determines that a process proceeds to a heating sequence of the electric-power storage apparatus 2 and performs the procedure shown in FIG. 5 (the procedure of specifying the current value required for heating the electric-power storage apparatus 2). When the cell temperature BTMP is equal to or higher than the threshold, the heating determination unit 31 performs usual control of generating the on/off signal DGC so that the output current IB has the target value indicated by the signal IBR. When the electric-power storage apparatus 2 includes a plurality of cells and the temperature of each of the cells is measured, whether the process proceeds to the heating sequence is determined by using an average value of measured values or the lowest value of the measured values.

When the procedure of specifying the current value required for heating the electric-power storage apparatus 2 starts, the heating control unit 32 of the control unit 16 obtains first the cell temperature BTMP and a measured voltage (the output voltage VB detected by the voltage detector 18) when the output current IB is reduced to zero (Step S1). When the electric-power storage apparatus 2 includes a plurality of cells, for example, the voltage detector 18 is provided for each of the cells to measure a cell voltage and an average value of measured cell voltages is used as the measured voltage.

Next, an absolute value of a difference between the upper-limit voltage or the lower-limit voltage of the electric-power storage apparatus 2 defined in advance and the measured voltage is computed as an allowable voltage amplitude (Step S2). It is assumed in this case that an absolute value of the current value in the charge direction is equal to an absolute value of the current value in the discharge direction. Regarding which of the absolute value of the difference between the upper-limit voltage and the measured voltage and the absolute value of the difference between the lower-limit voltage and the measured voltage is computed, one of them can be computed based on the value defined in advance or both of them can be computed to use, for example, a smaller absolute value as the allowable voltage amplitude.

Next, the heating control unit 32 computes or measures the frequency dependency of the resistance value of the internal resistance 21 (Step S3). Specifically, the frequency dependency of the resistance value of the internal resistance 21 corresponding to the SOC and the cell temperature BTMP is computed based on the data table of the initial data of the electric-power storage apparatus 2 held by the control unit 16. Alternatively, as explained above, the frequency dependency of the internal resistance 21 is measured based on the voltage relaxation process immediately after the current is reduced to zero. While the control unit 16 can obtain the SOC of the electric-power storage apparatus 2 by any method, the control unit 16 calculates the SOC based on, for example, the measured voltage.

Next, the heating control unit 32 sets the current value (Step S4) and sets the frequency (Step S5). For the current value set in Step S4 and the frequency set in Step S5, for example, initial values are defined and these initial values are used for the first time (before repetition according to Step S6 to be explained later is performed). For the initial values, a fixed value can be used or a value different for each SOC can be set.

The heating control unit 32 obtains the resistance value of the internal resistance 21 based on a set frequency and the frequency dependency computed or measured in Step S3 and determines whether a product of the obtained resistance value and the set current value is equal to or lower than the allowable voltage amplitude (Step S6). When it is determined that the product of the resistance value and the set current value is equal to or lower than the allowable voltage amplitude (YES at Step S6), the heating control unit 32 specifies the set frequency and the set current value as the frequency and the current value used in the heating sequence, respectively (Step S7).

When it is determined that the product of the resistance value and the set current value exceeds the allowable voltage amplitude (NO at Step S6), the process returns to Step S4. When the process returns to Step S4 via Step S6, at least one of the frequency and the current value to be set at subsequent Steps S4 and S5 is changed from the set value. For example, the current value is changed to a smaller value or the frequency is changed to a larger value. As the product of the resistance value and the set current value becomes larger, a heating effect becomes higher. Accordingly, to increase the product of the resistance value of the internal resistance 21 and the set current value as much as possible without exceeding the allowable voltage amplitude, it is desirable that the initial value of the current value is large and the initial value of the frequency is small.

When the frequency and the current value used for the heating sequence are specified in the above procedure, the heating control unit 32 generates the on/off signal DGC based on the specified frequency and the specified current value, thereby controlling charge/discharge of the electric-power storage apparatus 2. Specifically, for example, when the current waveform shown in FIG. 3 is used, a current is applied in an energizing pattern that a period of a pair of charge discharge is regarded as a period corresponding to the specified frequency, the absolute value of the charge current is regarded as the specified current value, and the absolute value of the discharge current is regarded as the specified current value. It is desirable that the absolute value of a current is gradually increased from zero to the current value specified in the procedure of FIG. 5. An increase rate of the applied current is, for example, about 0.1 A/sec to 1 A/sec so that a cell reaching the upper-limit voltage or the lower-limit voltage by a voltage fluctuation caused by a computation error and a cell variation does not appear.

The electric-power storage apparatus 2 can be heated by using the ripple current of the output current IB applied to the electric-power storage apparatus 2. For example, because the ripple current is increased as the frequency of charge/discharge of the on/off signal DGC is increased, the control unit 16 increases the ripple current by reducing the frequency to improve the heating effect of the electric-power storage apparatus 2.

While the case that the absolute value of the current value in the charge direction is equal to the absolute value of the current value in the discharge direction is explained, the current value in the charge direction and the current value in the discharge direction can be independently specified. For example, with respect to charge, the difference between the measured voltage and the upper-limit voltage can be provided as the allowable voltage amplitude and with respect to discharge, the difference between the measured voltage and the lower-limit voltage can be provided as the allowable voltage amplitude, thereby calculating the respective current values. When current values different for charge and discharge are used, the energizing time of charge and discharge is adjusted so that the charged electricity amount is substantially equal to the discharged electricity amount.

According to the present embodiment, the control unit 16 includes the heating determination unit 31 that determines whether the process proceeds to the heating sequence, and the heating control unit that specifies the frequency and the current value used in the heating sequence and controls charge/discharge based on the specified frequency and the specified current value to heat the electric-power storage apparatus 2. The present invention is not limited to this case and it can be configured so that the heating determination unit and the heating control unit are provided separately from the control unit 16 and the control unit 16 performs control other than during heating.

While the current value is specified so that the product of the obtained resistance value and the obtained current value is equal to or lower than the allowable voltage amplitude in the procedure shown in FIG. 5, the current value can be specified in a procedure other than the procedure shown in FIG. 5 such as by setting the current value to be specified in advance.

As explained above, according to the present embodiment, when the temperature of the electric-power storage apparatus 2 is lower than the lower limit temperature when the electric-power storage apparatus 2 starts up, the control unit 16 obtains a frequency characteristic value of the resistance value of the internal resistance 21 of the electric-power storage apparatus 2 corresponding to the temperature and the charge level of the electric-power storage apparatus 2 and generates an on/off signal for applying a current alternately repeating charge and discharge in a repetition period corresponding to the frequency specified based on the frequency characteristic, thereby controlling charge/discharge of the electric-power storage apparatus 2. Consequently, the temperature of the electric-power storage apparatus including the electric-power storage device such as a secondary battery or an electric double-layer capacitor can be efficiently increased.

### Industrial Applicability

As described above, the charge/discharge device and the charge/discharge controlling method according to the present invention are useful for a charge/discharge device that performs charge/discharge control of an electric-power storage apparatus and are particularly suitable in a case where the electric-power storage apparatus may be started up in a low-temperature environment.

### Reference Signs List

1 charge/discharge device
2 electric-power storage apparatus
11 rector
12 filter capacitor
13 switching circuit
14H, 14L switching element
15 smoothing reactor
16 control unit
17 current detector
18 voltage detector
31 heating determination unit
32 heating control unit
41 current waveform
42 frequency dependency of resistance value of internal resistance 21 at -15°C
43 frequency dependency of resistance value of internal resistance 21 at -5°C
44 frequency dependency of resistance value of internal resistance 21 at 5°C
45 frequency dependency of resistance value of internal resistance 21 at 25°C

## Claims

1. A charge/discharge device (1) that is configured to control charge/discharge of an electric-power storage apparatus (2), the charge/discharge device (1) comprising:
a heating determination unit (31) that is configured to obtain a temperature of the electric-power storage apparatus (2) at a time of starting up the electric-power storage apparatus (2) and determine whether to heat the electric-power storage apparatus (2) based on the temperature;
**characterized by** further comprising:
a heating control unit (32) that is configured to control heating of the electric-power storage apparatus (2), when the heating determination unit (31) determines to heat the electric-power storage apparatus (2), by obtaining a frequency characteristic, which is a relation between a frequency of charge and discharge and a resistance value of an internal resistance (21) of the electric-power storage apparatus (2) corresponding to the temperature and an obtained charge level of the electric-power storage apparatus (2) and by performing control of alternately repeating charge and discharge of the electric-power storage apparatus (2) in a charge/discharge period specified based on the frequency characteristic; and
a voltage measurement unit (18) that is configured to measure a voltage of the electric-power storage apparatus (2),
wherein the heating control unit (32) is configured to apply any current to the electric-power storage apparatus (2) for a fixed period of time, then reduce the current to zero, and obtain the frequency characteristic based on a voltage reduction characteristic obtained based on a time change in a measured voltage of the voltage measurement unit (18) immediately after the current is reduced to zero.

2. The charge/discharge device according to claim 1, wherein the heating determination unit (31) is configured to determine to heat the electric-power storage apparatus (2) when a temperature of the electric-power storage apparatus (2) is lower than a lower-limit temperature value.

3. The charge/discharge device according to claim 1, wherein the frequency characteristic is initial data of the internal resistance (21) of the electric-power storage apparatus (2) obtained in advance for each temperature and each charge level of the electric-power storage apparatus (2).

4. The charge/discharge device according to claim 1, wherein the heating control unit (32) is configured to perform control so that a charge amount energized at a time of charge is equal to a charge amount energized at a time of discharge.

5. The charge/discharge device according to claim 1, wherein the heating control unit (32) is configured to control a charge current to be applied to the electric-power storage apparatus (2) using, as an upper limit value of the charge current, a value obtained by dividing a difference between a measured voltage of the voltage measurement unit (18) when the current applied to the electric-power storage apparatus (2) is reduced to zero and an upper-limit voltage of the electric-power storage apparatus (2) by the internal resistance (21).

6. The charge/discharge device according to claim 1, wherein the heating control unit (32) is configured to control a charge current to be applied to the electric-power storage apparatus (2) using, as an upper limit value of the charge current, a value obtained by dividing a difference between a measured voltage of the voltage measurement unit (18) when the current applied to the electric-power storage apparatus (2) is reduced to zero and a lower-limit voltage of the electric-power storage apparatus (2) by the internal resistance (21).

7. The charge/discharge device according to claim 1, wherein the heating control unit (32) is configured to control heating of the electric-power storage apparatus (2) by controlling a ripple component of a current applied to the electric-power storage apparatus (2).

## Patentansprüche

1. Lade-/Entladevorrichtung (1), die dazu ausgelegt ist, einen Lade-/Entladevorgang einer Elektroenergiespeichereinrichtung (2) zu steuern, wobei die Lade-/Entladevorrichtung (1) umfasst:
eine Erwärmungsbestimmungseinheit (31), die dazu ausgelegt ist, eine Temperatur der Elektroenergiespeichereinrichtung (2) zu einem Zeitpunkt des Hochfahrens der Elektroenergiespeichereinrichtung (2) zu ermitteln und auf Grundlage der Temperatur zu bestimmen, ob die Elektroenergiespeichereinrichtung (2) erwärmt werden soll;
**dadurch gekennzeichnet, dass** sie darüber hinaus umfasst:
eine Erwärmungssteuereinheit (32), die dazu ausgelegt ist, die Erwärmung der Elektroenergiespeichereinrichtung (2), wenn die Erwärmungsbestimmungseinheit (31) bestimmt, dass die Elektroenergiespeichereinrichtung (2) erwärmt werden soll, dadurch zu steuern, dass eine Frequenzcharakteristik ermittelt wird, bei der es sich um ein Verhältnis zwischen einer Lade- und Entladefrequenz und einem Widerstandswert eines Innenwiderstands (21) der Elektroenergiespeichereinrichtung (2) handelt, welcher der Temperatur und einem erzielten Ladungspegel der Elektroenergiespeichereinrichtung (2) entspricht, und eine Steuerung durchgeführt wird, bei der abwechselnd ein Lade- und Entladevorgang der Elektroenergiespeichereinrichtung (2) in einer auf Grundlage der Frequenzcharakteristik spezifizierten Lade-/Entladeperiode wiederholt wird; und
eine Spannungsmesseinheit (18), die dazu ausgelegt ist, eine Spannung der Elektroenergiespeichereinrichtung (2) zu messen,
wobei die Erwärmungssteuereinheit (32) dazu ausgelegt ist, die Elektroenergiespeichereinrichtung (2) einen festen Zeitraum lang mit einem beliebigen Strom zu beaufschlagen, den Strom dann auf Null zu reduzieren und die Frequenzkennline auf Grundlage einer Spannungsreduktionscharakteristik, die auf Grundlage einer Zeitveränderung bei einer gemessenen Spannung der Spannungsmesseinheit (18) beruht, unmittelbar, nachdem der Strom auf Null reduziert wurde, zu ermitteln.

2. Lade-/Entladevorrichtung nach Anspruch 1, wobei die Erwärmungsbestimmungseinheit (31) dazu ausgelegt ist, zu bestimmen, dass die Elektroenergiespeichereinrichtung (2) erwärmt werden soll, wenn eine Temperatur der Elektroenergiespeichereinrichtung (2) niedriger ist als ein unterer Temperaturgrenzwert.

3. Lade-/Entladevorrichtung nach Anspruch 1, wobei es sich bei der Frequenzcharakteristik um Ausgangsdaten des Innenwiderstands (21) der Elektroenergiespeichereinrichtung (2) handelt, die vorab für jede Temperatur und jeden Ladungspegel der Elektroenergiespeichereinrichtung (2) ermittelt wurden.

4. Lade-/Entladevorrichtung nach Anspruch 1, wobei die Erwärmungssteuereinheit (32) dazu ausgelegt ist, eine Steuerung so durchzuführen, dass eine zu einem Ladezeitpunkt durch Energetisierung vorhandene Lademenge gleich einer zur einem Entladezeitpunkt durch Energetisierung vorhandenen Lademenge ist.

5. Lade-/Entladevorrichtung nach Anspruch 1, wobei die Erwärmungssteuereinheit (32) dazu ausgelegt ist, einen Ladestrom zu steuern, mit dem die Elektroenergiespeichereinrichtung (2) beaufschlagt werden soll, indem als oberer Grenzwert des Ladestroms ein Wert verwendet wird, der ermittelt wird, indem eine Differenz zwischen einer gemessenen Spannung der Spannungsmesseinheit (18), wenn der Strom, mit dem die Elektroenergiespeichereinrichtung (2) beaufschlagt wird, auf Null reduziert ist, und einer oberen Grenzspannung der Elektroenergiespeichereinrichtung (2) durch den Innenwiderstand (21) dividiert wird.

6. Lade-/Entladevorrichtung nach Anspruch 1, wobei die Erwärmungssteuereinheit (32) dazu ausgelegt ist, einen Ladestrom zu steuern, mit dem die Elektroenergiespeichereinrichtung (2) beaufschlagt werden soll, indem als oberer Grenzwert des Ladestroms ein Wert verwendet wird, der ermittelt wird, indem eine Differenz zwischen einer gemessenen Spannung der Spannungsmesseinheit (18), wenn der Strom, mit dem die Elektroenergiespeichereinrichtung (2) beaufschlagt wird, auf Null reduziert ist und eine untere Grenzspannung der Elektroenergiespeichereinrichtung (2) durch den Innenwiderstand (21) dividiert wird.

7. Lade-/Entladevorrichtung nach Anspruch 1, wobei die Erwärmungssteuereinheit (32) dazu ausgelegt ist, die Erwärmung der Elektroenergiespeichereinrichtung (2) zu steuern, indem eine Welligkeitskomponente eines Stroms gesteuert wird, mit dem die Elektroenergiespeichereinrichtung (2) beaufschlagt wird.

## Revendications

1. Dispositif de charge/décharge (1) qui est configuré pour commander une charge/décharge d'un appareil de stockage de puissance électrique (2), le dispositif de charge/décharge (1) comprenant :
une unité de détermination de chauffage (31) qui est configurée pour obtenir une température de l'appareil de stockage de puissance électrique (2) à un moment de démarrage de l'appareil de stockage de puissance électrique (2) et déterminer s'il faut chauffer l'appareil de stockage de puissance électrique (2) sur la base de la température ;
**caractérisé en ce qu'**il comprend en outre :
une unité de commande de chauffage (32) qui est configurée pour commander un chauffage de l'appareil de stockage de puissance électrique (2), lorsque l'unité de détermination de chauffage (31) détermine de chauffer l'appareil de stockage de puissance électrique (2), en obtenant une caractéristique de fréquence, laquelle est une relation entre une fréquence de charge et de décharge et une valeur de résistance d'une résistance interne (21) de l'appareil de stockage de puissance électrique (2) correspondant à la température et un niveau de charge obtenu de l'appareil de stockage de puissance électrique (2) et en effectuant une commande de répétition alternée de charge et de décharge de l'appareil de stockage de puissance électrique (2) dans une période de charge/décharge spécifiée sur la base de la caractéristique de fréquence ; et
une unité de mesure de tension (18) qui est configurée pour mesurer une tension de l'appareil de stockage de puissance électrique (2),
sachant que l'unité de commande de chauffage (32) est configurée pour appliquer un quelconque courant à l'appareil de stockage de puissance électrique (2) pour une période fixe, puis réduire le courant à zéro, et obtenir la caractéristique de fréquence sur la base d'une caractéristique de réduction de tension obtenue sur la base d'un changement de temps dans une tension mesurée de l'unité de mesure de tension (18) immédiatement après que le courant est réduit à zéro.

2. Le dispositif de charge/décharge selon la revendication 1, sachant que l'unité de détermination de chauffage (31) est configurée pour déterminer de chauffer l'appareil de stockage de puissance électrique (2) lorsqu'une température de l'appareil de stockage de puissance électrique (2) est inférieure à une valeur de température de limite inférieure.

3. Le dispositif de charge/décharge selon la revendication 1, sachant que la caractéristique de fréquence correspond à des données initiales de la résistance interne (21) de l'appareil de stockage de puissance électrique (2) obtenues à l'avance pour chaque température et chaque niveau de charge de l'appareil de stockage de puissance électrique (2).

4. Le dispositif de charge/décharge selon la revendication 1, sachant que l'unité de commande de chauffage (32) est configurée pour effectuer une commande de telle sorte qu'une quantité de charge alimentée à un moment de charge est égale à une quantité de charge alimentée à un moment de décharge.

5. Le dispositif de charge/décharge selon la revendication 1, sachant que l'unité de commande de chauffage (32) est configurée pour commander un courant de charge devant être appliqué à l'appareil de stockage de puissance électrique (2) moyennant, en tant que valeur limite supérieure du courant de charge, une valeur obtenue en divisant une différence entre une tension mesurée de l'unité de mesure de tension (18) lorsque le courant appliqué à l'appareil de stockage de puissance électrique (2) est réduit à zéro et une tension de limite supérieure de l'appareil de stockage de puissance électrique (2) par la résistance interne (21).

6. Le dispositif de charge/décharge selon la revendication 1, sachant que l'unité de commande de chauffage (32) est configurée pour commander un courant de charge devant être appliqué à l'appareil de stockage de puissance électrique (2) moyennant, en tant que valeur limite supérieure du courant de charge, une valeur obtenue en divisant une différence entre une tension mesurée de l'unité de mesure de tension (18) lorsque le courant appliqué à l'appareil de stockage de puissance électrique (2) est réduit à zéro et une tension de limite inférieure de l'appareil de stockage de puissance électrique (2) par la résistance interne (21).

7. Le dispositif de charge/décharge selon la revendication 1, sachant que l'unité de commande de chauffage (32) est configurée pour commander un chauffage de l'appareil de stockage de puissance électrique (2) en commandant une composante d'ondulation d'un courant appliqué à l'appareil de stockage de puissance électrique (2).
